# EUROPEAN PATENT SPECIFICATION

(11) **EP 2 099 168 B1**
(45) Date of publication and mention of the grant of the patent: **24.10.2012**
(21) Application number: 08005491.9
(22) Date of filing: 25.03.2008
(51) Int. Cl.: G06F 9/44, H04L 29/06

(54) **System, method and computer program product for bulk event transfer**
System, Verfahren und Computerprogrammprodukt zur Übertragung von Bulk-Ereignissen
Système, procédé et produit de programme informatique pour transfert d'événement en vrac

(30) Priority: 07.03.2008 US 73662
(43) Date of publication of application: 09.09.2009
(73) Proprietor: Software AG, 64297 Darmstadt (DE)
(72) Inventor: Yendluri, Prasad, San Jose CA 95123 (US)
(74) Representative: Heselberger, Johannes

(56) References cited:
- WO-A2-2005/026915
- US-A1- 2004 001 514
- US-A1- 2004 010 520
- US-A1- 2004 039 964
- US-A1- 2004 162 873
- US-A1- 2005 015 472
- US-A1- 2005 157 756
- US-A1- 2007 174 815
- US-B1- 6 304 881
- US-B1- 6 480 717
- KHOI ANH PHAN, ZAHIR TARI, PETER BERTOK: "A Benchmark on SOAP's Transport Protocols Performance For Mobile Applications", PROCEEDINGS OF THE 2006 ACM SYMPOSIUM ON APPLIED COMPUTING, 23 April 2007 (2007-04-23), - 27 April 2007 (2007-04-27), pages 1139-1144,

## Description

### CROSS REFERENCE TO RELATED APPLICATIONS

This application is related to co-pending U.S. Patent Application serial no. 12/073,642, entitled "Distributed Business Process Tracking", attorney docket no. 30478-255291 and serial no. 12/073,647, entitled "policy Negotiation System and Method", attorney docket no. 30478-255294, each filed on a date even herewith and each of which is incorporated herein by reference.

### BACKGROUND OF THE INVENTION

The present invention is related generally to a system, method and computer program product for the bulk transfer of events.

Modern businesses rely on information technology (IT) to assist in carrying out business tasks. An enterprise's IT infrastructure needs to consistently perform to specification to ensure the success of the business. The IT infrastructure may be used for an enterprise's communication, database management, inventory tracking, shipment records, website management, business-to-business (B2B) ecommerce, business-to-consumer (B2C) ecommerce, accounting, billing, order tracking, customer support tracking, document management, and a possibly infinite number of other tasks.

An enterprise applies business process management (BPM) and Business Application Monitoring (BAM) in order to continuously improve its performance. through proactive controls and agile responses to adjusting and optimizing the many active processes which collectively define its business outcomes. The disciplined frameworks of Business Process Management and Business Application Monitoring are the most advanced and mature frameworks for effecting total process excellence, representing a culmination of the past fifty years of achievements in methods, tools, and systems. It is a breakthrough in optimizing large-scale complex adaptive systems - like the modern business.

BPM and BAM may generate large amounts of data and events that need to be transmitted and processed. The data and events may include a large number of small Document US 2004/0162873 A1 provides a method for making a WWW application using the HTTP protocol accessible to a SOAP client using the SOAP protocol. The SOAP client first sends a SOAP request message to a SOAP wrapper, which then communicates with the WWW application server using multiple HTTP communications. The SOAP wrapper creates a single SOAP response message based on the HTTP communications, which is then sent back to the original SOAP client. Documents US 2007/0174815 A1, US2005/0015472 A1 and US 2004/0039964 A1 provide further technological background information about distributed computing systems. The document US 2004/0010520 Ai (TSANG ANDY [US]; BARBER BRANDON [US]);15 January 2004; titled "Portal bridge". The document discloses technology for accessing multiple network resources through a single portal. A Portal Bridge directs requests from the portal to multiple network resources and channels responses from the network resources to the portal. The Portal Bridge receives a request from a portal that calls for a response from a targeted network resource. The Portal Bridge forwards a request to the targeted network resource to obtain the response sought by the portal's request. The Portal Bridge receives a response to the request from the targeted network resource. The Portal Bridge processes the response and forwards the processed response to the portal. During processing, the Portal Bridge replaces links in the response with links to the Portal Bridge. This enables the Portal Bridge to receive and properly route any portal requests arising out of the links.
The document US 2004/0001514 A1 (WOOKEY MICHAEL J [US] et al); 1 January 2004; titled "Remote services system communication module". The document relates to a remote services communication module which includes: a communication protocol and a communication encryption module. The communication protocol module provides support for an application level protocol used in a remote services system. The communication encryption module supports plug-in encryption modules.
The document US 6,480,717 B1 (RAMASWAMY SATYANARAYANAN [US]); 12 November 2002; titled "Tunneling of non-GSM signaling messages in a GSM based network to enable both non-GSM circuit service and GSM packet service to the mobile station". The document discloses a non-GSM network that uses a GSM serving GPRS support node (40) and a gateway support node for providing packet service to transmit a message capsule (52) containing one or more signaling messages between a mobile station (36) and a mobile switching center (46). The mobile station (36) constructs an uplink tunneling of messages protocol envelope (48) that includes, in addition to a uplink message capsule, information specific to non-GSM protocols and the serving GPRS support node (40) determines a destination of the uplink message capsule based on a routing area identifier and the information specific to the non-GSM protocols. The serving GPRS support node (40) constructs a downlink tunneling of messages protocol envelope that includes a downlink message capsule and information specific to the non-GSM protocols and transmits the downlink tunneling of messages to the mobile station (36) and the mobile station extracts the downlink message capsule based on the information specific to the non-GSM protocols.
The document WO 2005/026915 A2 (CHIEN PO-HAN [US]; PUGH RICHARD S [US]); 24 March 2005; titled "SYSTEMS AND METHODS FOR DYNAMICALLY UPDATING SOFTWARE IN A PROTOCOL GATEWAY". The document discloses a method for dynamically updating software modules comprises loading a new software module to replace an existing software module. Before the old software module is terminated, however, a check is run to determine if the old software module is engaged in, or being used by, any existing routines, such as an existing communication session. If the old software module is being used, then it can be preserved. Once the old software module is no longer being used, then it can be terminate and all new routines can be configured to use the new software module.
The documents US 6,304,881 B1; Khoi Anh Phan, Zahir Tari, Peter Bertok "A Benchmark on SOAP's Transport Protocols Performance for Mobile Applications" (23 - 27 April 2007); and US 2005/157756 A1 provide further technological background information about distributed computing systems. messages. Transmitting and processing the large number of separate messages may consume excessive network bandwidth and processing overhead unnecessarily.

### SUMMARY

The invention is defined in independent claims 1, 8 and 10. Embodiments of the invention provide a method, comprising: providing a plurality of messages cach formatted according to a same protocol, each of the plurality of messages being intended for a same destination; combining the plurality of messages into a single message that is formatred according to the same protocol and further comprising placing the plurality of messages into a body of the single message.

In one aspect, the method may comprise providing a first node on which a plurality of different processes are running, the process providing notices to be sent to other nodes: receiving the notices at a process log; generating a respective message for each notice in the process log, the message being formatted according to a same protocol; determining the messages intended for a same destination node; combining the messages intended for the same destination node into a body of a wrapper message, the wrapper message being formatted according to the same protocol and monitoring the messages being preserved in the body as distinct messages fen-nattcd according to the same protocol; and sending the wrapper message to the same destination node based on the wrapper message at a predetermined time.

According to another embodiment, a method, comprises: receiving at a node a wrapper message formatted according to a protocol and including a header and a body, the body including a plurality of distinct messages formatted according to the protocol: decoding the header to determine the number or messages in the body of the wrapper message.

In a further aspect, the method, comprises: receiving a plurality of requests from a requester at a provider; generating respective responses .to the requests at the provider; formatting the responses according to a protocol; combining the responses for the same requestor into a single response message formatted according to the same protocol, the responses being arrange in a body of the response message; providing the response message from the provider via a network to the requester as a response to the plurality of requests.

Another embodiment provides a computer based system for monitoring a process, the system comprising: a process log including log entries formatted accruing to a protocol; and a notification manager adapted to determine if the log entries in the process log are for a same destination, and if the log entry in the process log is for the same destination, collect the log entries from the process log, generate a wrapper message including the log entries and formatted according to the protocol, and send the log entry to the client.

### BRIEF DESCRIPTION OF THE DRAWINGS

Embodiments of the invention will now be described in connection with the associated drawings, in which:

Figure 1 depicts a block diagram of system according to an embodiment of the present invention;

Figures 2 illustrates an example of a message according to an embodiment of the present invention;

Figure 3 illustrates an example of a message according to an embodiment of the present invention;

Figures 4A. and 4B illustrate examples of message exchange according to the prior art and to an embodiment of the present invention; and

Figure 5 illustrates another system according to an embodiment of the present invention.

### DETAILED DESCRIPTION OF THE INVENTION

Embodiments of the present invention may include apparatuses for performing the operations disclosed herein. An apparatus may be specially constructed for the desired purposes, or it may comprise a general-purpose device selectively activated or reconfigured by a program stored in the device.

Embodiments of the invention may be implemented in one or a combination of hardware, firmware, and software. Embodiments of the invention may also be implemented as instructions stored on a machine-readable medium, which may be read and executed by a computing platform to perform the operations described herein. A machine-readable medium may include any mechanism for storing or transmitting information in a form readable by a machine (*e*.*g*., a computer).

References to "one embodiment," "an embodiment," "example embodiment," "various embodiments," *etc*., may indicate that the embodiment(s) of the invention so described may include a particular feature, structure, or characteristic, but not every embodiment necessarily includes the particular feature, structure, or characteristic. Further, repeated use of the phrase "in one embodiment," or "in an exemplary embodiment," do not necessarily refer to the same embodiment, although they may.

Embodiments of the present invention relate to the bulk transfer of events and/or associated data. The events or data may be transferred between various nodes on a network. A first node on the network may have various events or data to be transmitted over the network to other nodes. The events or data may be arranged into distinct messages. Some of the messages may be intended for the same destination node. Those messages intended for the same destination node are combined together into a bulk message. The bulk message may be transmitted over the network to the destination node. The bulk message is a single message including a plurality of distinct messages. The destination node may then process the bulk message to retrieve the plurality of messages from the bulk message.

The messages are formatted according to a same protocol. The messages may be distinct from each other and generated by different process executing on the first node. The distinct messages are combined into the bulk message, also referred to as a wrapper message. The bulk message is formatted according to the same protocol as the plurality of messages. The combining of the distinct messages into a bulk message may be done at a predetermined time, for example, such as every second, or may be done upon occurrence of an event, such as when a particular number of messages to be sent to the same destination node is accumulated.

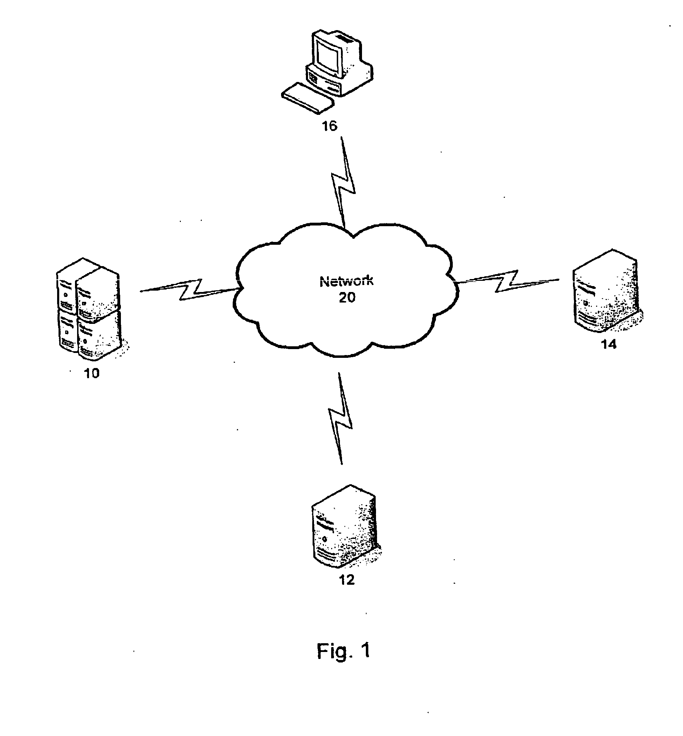

FIG. 1 illustrates an exemplary system implementing an embodiment of the present invention. The system includes a number of nodes 10, 12, 14, 16 that may communicate with each other or other nodes via a network 20. One or more processes may be running on one of the nodes, for example node 10. As the processes execute, there may be data generated, for example an event notification message, that is to be sent to another node. A number of different messages may be generated by the one or more processes. The messages are formatted according to the same protocol, for example, the simple object access protocol (SOAP). Those messages that are intended for the same destination may be identified and combined into a single message to be sent that destination, for example, node 14. The identification and combination of the messages may be done at predetermined intervals, for example, at a predetermined time interval, such as, every second. At that time, the messages may be examined to identify those messages intended for node 14. Those messages intended for node 14 may be combined into a single message and transmitted to node 14. Alternatively, the messages intended for the same destination may be identified and stored, for example, in a log. When a predetermined number of messages is present in the log, the messages may be appropriately combined into a bulk message and transmitted to their respective destinations. The single message is formatted according to the same protocol as the plurality of messages combined therein, for example, SOAP.

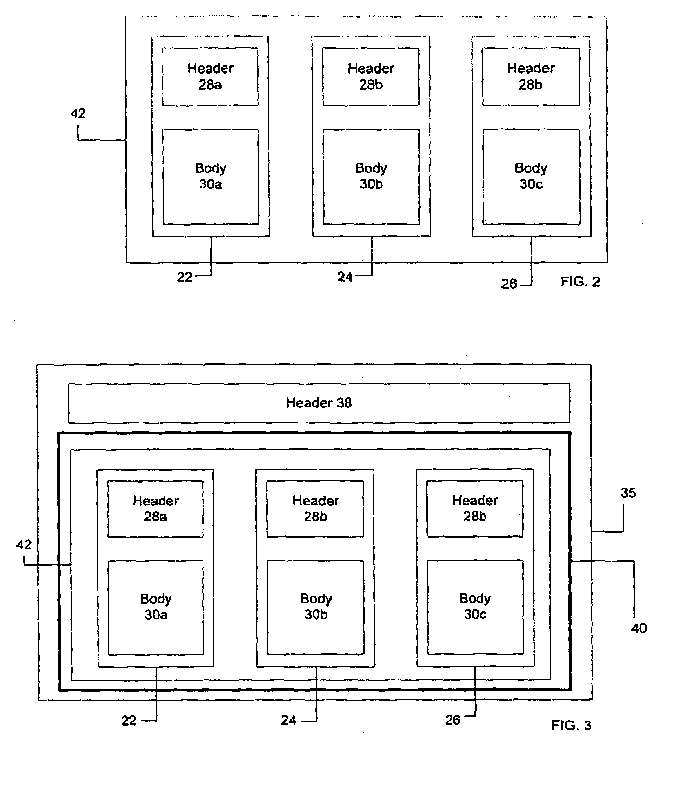

FIGS. 2 and 3 illustrate an example of a plurality of messages combined into a single message. In the example shown in FIG. 3, a plurality of distinct messages 22, 24, 26, in this case SOAP messages 22, 24, 26, are shown. Each of the SOAP messages 22, 24, 26 includes a respective header 23a-c and a respective body 30a-c. The header 28a-c of the messages may include the total number of wrapped messages and other contextual information such as, the identity of the sender of the wrapped message, identity of the receiver node, date and time-stamp of the message transmission etc. The body 30a-c of the messages may include the data intended for the destination node. For example, the body 30a-c may include the event notification information requested by the destination node. Each of the messages 22, 24, 26 may be distinct messages that each conform to the same protocol, here SOAP. Each of the messages 22, 24, 26 may have their own distinct header 28a-c and body 30a-c including different information.

The plurality of messages 22, 24, 26 may be combined or "wrapped" into a single wrapper message 35. The wrapper message 35 may be formatted according to the same protocol as the plurality of messages. In the example shown, the single message 35 is formatted according to SOAP. The single message 35 may also include a header 38 and a body 40. The header 38 may include information identifying each of the distinct messages included in the body, as well as the total number of wrapped messages and other contextual information such as, the identity of the sender of the wrapped message, identity of the receiver node, date and time-stamp of the message transmission etc. The body 40 of the wrapper message 35 may include the plurality of messages 22, 24, 26. The plurality of messages 22, 24, 26 may be preserved as distinct messages within the body 40.

As shown in Fig. 2 the plurality of messages 22, 24, 26 may be arranged in an inner wrapper 42. The inner wrapper 42 may be disposed within the body 40 of the wrapper message 35- The messages 22, 24, 26 may be arranged in, for example, an XML wrapper that forms the body of a SOAP message. This permits multiple SOAP messages to be sent in the body / payload of a single SOAP message. In general this approach to encasing multiple inner complete messages in a wrapper, permits the wrapped message to conform to the format of the protocol used to transfer the message.

Below is an example of how to facilitate carrying multiple events in a single SOAP message.

### Example when using SOAP 1.2

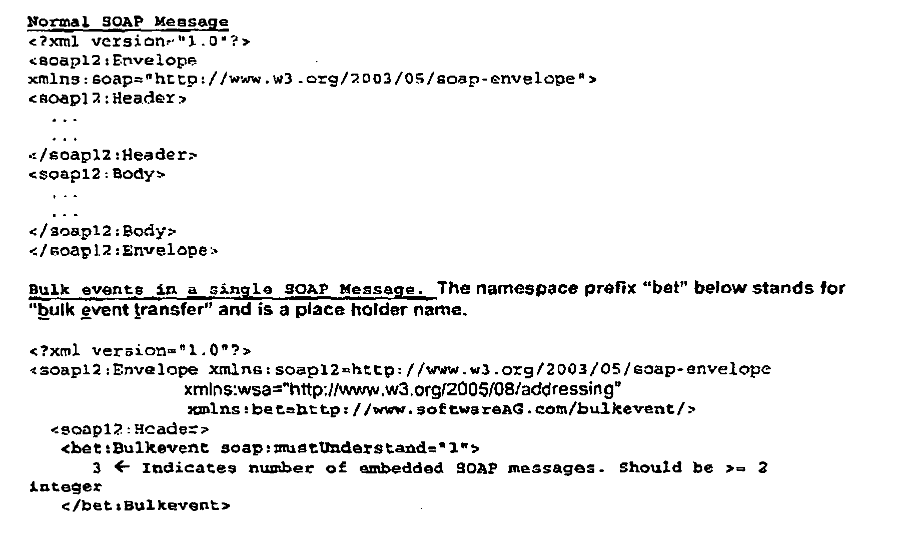

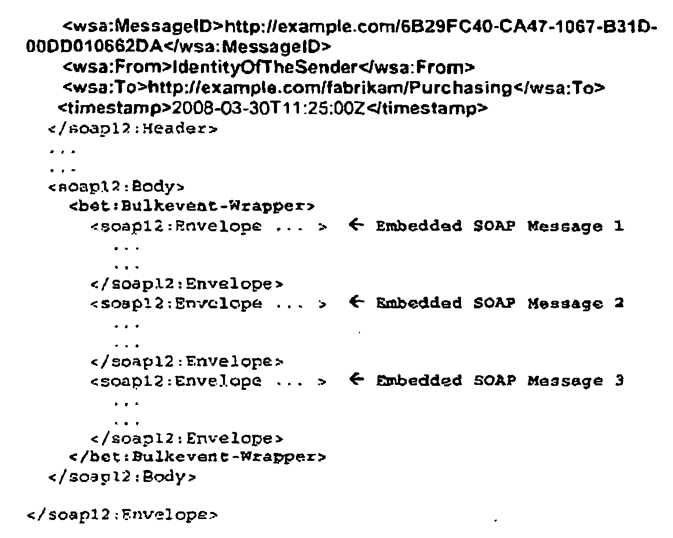

### When Using SOAP 1.1

All that changes is the namespace prefix "soap12" is changed to "soap11" and the namespace string "http: //www.w3.org/2003/05/soap-envelope" is changed to "http://schemas.xmlsoap.org/soap/envelope/"

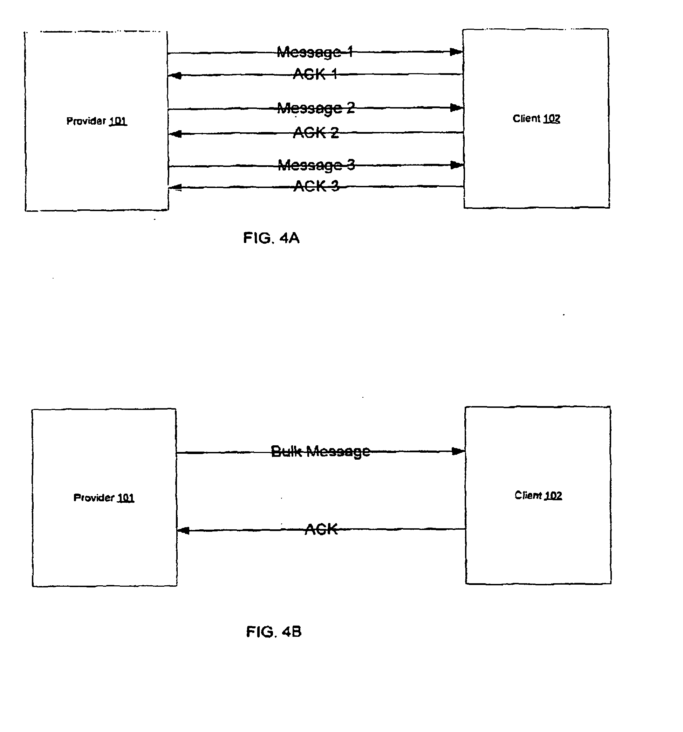

Figure 4A illustrates the round trips when not using the bulk message as opposed to the round trip when using a bulk message according to an embodiment of the invention, shown in Figure 4B.

Accordingly, a plurality of messages formatted according to a protocol may be combined into another message that is also formatted according to the same protocol. The other message, and the plurality of messages contained therein, may be transmitted to an intended destination based on the information in a header of the other message.

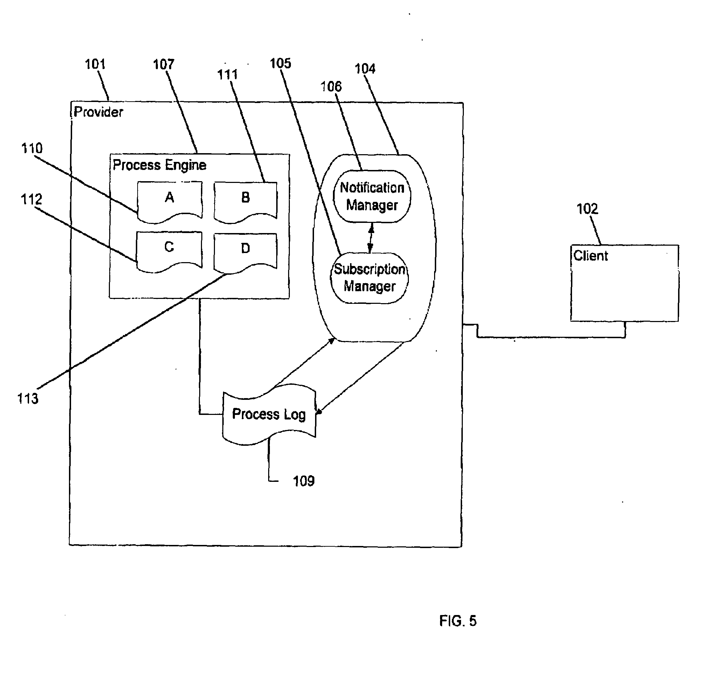

FIG. 5 depicts an exemplary system for distributed business process tracking that may be used in connection with exemplary embodiments of the present invention. A client 102 may initiate a distributed business process with any number of computer systems, each of which may be a provider 101. The following process will be described with respect to one provider 101, although there may be more than one provider 101 involved in the distributed business process. The client 102 may interact with each provider 101 in the same manner. The client 102 may desire to track the progress of a business process initiated with the provider 101. As the business process is executed by the provider 101, notifications may be generated and sent to the client 102. The client 102 may correlate the notifications to the business process, which may allow the client 102 to track the status of the business process using the notifications. A large number of relatively short event notification messages may be created.

The provider 101 may be any computer system that may be used for performing business processes. The provider 101 may be connected to a network, and may receive requests for the performance of distributed business processes from any other computer system connected to the network.

The client 102 may be any computer system that may initiate a distributed business process by requesting the performance of the distributed business process by the provider 101. The client 102 may be connected to the same network as the provider 101, and may send requests for the performance of distributed business processes to the provider 101 over the network. The client 102 may track the distributed business process as the process is performed by the provider 101 through notifications from the provider 101.

A subscription manager 105 may handle requests for subscriptions to notifications for processes from the client 102. Any suitable combination of hardware and software may be used to implement the subscription manager 105. For example, the subscription manager 105 may be a software component of a web service 104, and may be used to process subscription requests received by the provider 101 and generate confirmations of the subscriptions requests to be sent to the client 102. The subscription manager 105 may set up requested subscriptions on the notification manager 106.

The notification manager 106 may collect notifications for process types subscribed to by the client 101 and send the notifications to the client 101. Any suitable combination of hardware and software may be used to implement the notification manager 106. For example, the notification manager 106 may be a software component of a web service 104.

A process engine 107 may be any combination of hardware and software in the provider 101 suitable for performing a distributed business process. For example, the process engine 107 may be a processor in the provider 101 running specialized business transaction software.

A process log 109 may be any combination of hardware and software in the provider 101 suitable for storing log entries generated by the process engine 107 when performing a distributed business process. When the process engine 107 performs a distributed business process, log entries may be generated at various points during the performance for each of the process types being utilized. For example, if the process engine 107 is performing a purchase order process, a process type for checking inventory kept on another computer system for the item to be purchase may be utilized. Log entries may be generated, for example, when the process for checking inventory starts, when the request for the inventory check has been received and acknowledged by the other computer system, when the result of the inventory check has been returned to the provider 101, and when the process engine 107 processes the result of the inventory check. These log entries may be stored in the process log 109. In an exemplary embodiment, the event notification messages are created fro entries in the process log. Alternatively, the process log may store event notification messages.

Process A 110, Process B 111, Process C 112, and Process D 113 may he exemplary processes that may be utilized by the process engine 107 in the performance of a distributed business process. Each of the processes A 110, B 111, C 112 and D 113 may be used by the process engine 107 to perform a different part of the distributed business process. For example, process A 110 may be used for communicating with another computer system to check inventory, while process B 112 may be used for communicating with a computer system containing financial information.

The notification manager 106 may create a message for each of the notifications stored in the log. The notification manager 106 may also combine a plurality of distinct messages intended for the same destination into a wrapper message. The plurality of messages may be generated based on notifications from various ones of the processes A 110, B 111, C 112 and D 113. The notification manager 106 may generate the messages at a predetermined time interval, for example every second, and then combine the messages intended for the same destination into the wrapper message. Alternatively, the process log 109 may store notifications, messages or other data intended for the same destination in dedicated portions of the process log 109. The process log 109 may also create or store messages. The notification manager 106 may track the number of notifications, messages or other data within the process log and generate and send the wrapper message when there is a predetermined number of notifications, messages or other data for the same destination in the process log 109 or when the present time interval has expired. The process log may also notify the notification manager 106 when the predetermined number of notifications have accumulated.

A predetermined time interval at which to send the wrapper message to the client may be agreed upon between the client 102 and the provider 101. The client 102 and the provider 101 may have a policy negotiation, during which the client 102 and provider 101 agree on the predetermined time interval or other policy for transmitting and receiving the wrapper message.

The client 102 may expect the wrapper message to arrive at the predetermined time. The client 102 may examine messages arriving at approximately the predetermined time to identify the wrapper message. Once identified at the client 102, the wrapper message may be processed to retrieve the plurality messages from within the body of the wrapper messages. The header of the wrapper message may indicate that the wrapper message is a bulk message and identify the particular number of distinct messages in the wrapper message. The client 102 may process the header to obtain this information and then process the information within the body of the wrapper message accordingly.

## Claims

1. A method, comprising:
providing a plurality of messages (22, 24, 26) each formatted according to a same protocol, each of the plurality of messages (22, 24, 26) being intended for a same (14); intended for a same destination (14);
combining the plurality of messages (22, 24, 26) into a single wrapper message (35) by placing the plurality of messages (22, 24, 26) into a body (40) of the single wrapper message (35);
**characterized in that**
the single wrapper message (35) is formatted into the same format as the same protocol while maintaining the format of the plurality of messages formatted according to the same protocol.

2. The method of claim 1, wherein the single wrapper message (35) includes a header (38), and transmitting the plurality of messages (22, 24, 26) to the same destination (14) based on the header (38) of the single wrapper message (35).

3. The method of claim 1, wherein combining the plurality of messages (22, 24, 26) comprises maintaining the plurality of messages (22, 24, 26) as distinct messages in the body (40) of the single wrapper message (35).

4. The method of claim 3, wherein combining the plurality of messages (22, 24, 26) comprises arranging the plurality of messages (22, 24, 26) in an inner wrapper (42) that is disposed in the body (40) of the single wrapper message (35).

5. The method of claim 1, further comprising generating the plurality of messages (22^{,} 24, 26) from different processes executing on a first node (10) in a network (20).

6. The method of claim 1, further comprising sending the single wrapper message (35) to the same destination (14) at a predetermined time.

7. The method of claim 1, wherein the same destination (14) is a second node (14) on the network (20) and further comprising receiving the single wrapper message (35) at the second node (14);
identifying the single wrapper message (35) as containing the plurality of messages (22, 24, 26); and
retrieving the plurality of messages (22, 24, 26) from the single wrapper message (35).

8. A method, comprising:
receiving at a node (14) a single wrapper message (35) including a header (38) and a body (40), the body (40) including a plurality of distinct messages (22, 24, 26) formatted according to a same protocol; decoding the header (38) to determine the number of messages (22, 24, 26) in the body (40) of the single wrapper message (35);
**characterized in that**
the single wrapper message (35) is formatted into the same format as the same protocol while maintaining the format of the plurality of distinct messages formatted according to the same protocol.

9. The method of claim 8, further comprising:
correlating the messages (22, 24, 26) included in the received single wrapper message (35) based on the individual message headers (28a-c) and protocol wrappers.

10. A computer program product comprising instructions that when executed by a computing platform causes the computing platform to perform the method of any of claims 1 to 7 or 8 to 9.

## Patentansprüche

1. Verfahren aufweisend:
Bereitstellen einer Mehrzahl von Nachrichten (22, 24, 26), wobei jede gemäß demselben Protokoll formatiert ist, wobei jede der Mehrzahl von Nachrichten (22, 24, 26) für dasselbe Ziel (14) vorgesehen ist;
Kombinieren der Mehrzahl von Nachrichten (22, 24, 26) in eine einzelne Hüllennachricht (35) durch Platzieren der Mehrzahl von Nachrichten (22, 24, 26) in einen Körper (40) der einzelnen Hüllennachricht (35);
**gekennzeichnet dadurch dass**
die einzelne Hüllennachricht (35) in dasselbe Format formatiert ist wie dasselbe Protokoll, während das Format der Mehrzahl von Nachrichten, die gemäß demselben Protokoll formatiert sind, beibehalten wird.

2. Verfahren nach Anspruch 1, wobei die einzelne Hüllennachricht (35) einen Header (38) beinhaltet, und das Übertragen der Mehrzahl von Nachrichten (22, 24, 26) an dasselbe Ziel (14), auf dem Header (38), der einzelnen Hüllennachricht (35) basiert.

3. Verfahren nach Anspruch 1, wobei das Kombinieren der Mehrzahl von Nachrichten (22, 24, 26) das Beibehalten der Mehrzahl von Nachrichten (22, 24, 26) als getrennte Nachrichten in dem Körper (40) der einzelnen Hüllennachricht (35) umfasst.

4. Verfahren nach Anspruch 3, wobei das Kombinieren der Mehrzahl von Nachrichten (22, 24, 26) das Anordnen der Mehrzahl von Nachrichten (22, 24, 26) in eine innere Hülle (42) umfasst, welche in dem Körper (40) der einzelnen Hüllennachricht (35) angeordnet ist.

5. Verfahren nach Anspruch 1, weiterhin aufweisend das Erzeugen der Mehrzahl von Nachrichten (22, 24, 26) aus verschiedenen Prozessen, welche auf einem ersten Knoten (10) in einem Netzwerk (20) ausgeführt werden.

6. Verfahren nach Anspruch 1, weiterhin aufweisend das Senden der einzelnen Hüllennachricht (35) an dasselbe Ziel (14) zu einer vorbestimmten Zeit.

7. Verfahren nach Anspruch 1, wobei dasselbe Ziel (14) ein zweiter Knoten (14) in dem Netzwerk (20) ist und weiterhin aufweist, das Empfangen der einzelnen Hüllennachricht (35) auf dem zweiten Knoten (14);
Identifizieren, dass die einzelne Hüllennachricht (35) die Mehrzahl von Nachrichten (22, 24, 26) beinhaltet; und
Empfangen der Mehrzahl von Nachrichten (22, 24, 26) von der einzelnen Hüllennachricht (35).

8. Verfahren aufweisend:
Empfangen auf einem Knoten (14) einer einzelnen Hüllennachricht (35) beinhaltend einen Header (38) und einen Körper (40), wobei der Körper (40) eine Mehrzahl von unterschiedlichen Nachrichten (22, 24, 26) beinhaltet, welche gemäß demselben Protokoll formatiert sind;
Dekodieren des Headers (38), um die Anzahl von Nachrichten (22, 24, 26) in dem Körper (40) der einzelnen Hüllennachricht (35) zu bestimmen;
**gekennzeichnet dadurch dass**
die einzelne Hüllennachricht (35) in dasselbe Format wie dasselbe Protokoll formatiert ist, während das Format der Mehrzahl von unterschiedlichen Nachrichten, welche gemäß demselben Protokoll formatiert sind, beibehalten wird.

9. Verfahren nach Anspruch 8, weiterhin aufweisend:
Korrelieren der Nachrichten (22, 24, 26), die in der empfangenen einzelnen Hüllennachricht (35) beinhaltet sind, basierend auf den individuellen Nachrichtenheadern (28a - c) und Protokollhüllen.

10. Computerprogrammprodukt aufweisend Anweisungen, die bei Ausführung durch eine Rechenplattform die Rechenplattform dazu veranlassen, das Verfahren von einem der Ansprüche 1-7 oder 8-9 auszuführen.

## Revendications

1. Un procédé, comprenant :
la production d'une pluralité de messages (22, 24, 26) formatés chacun selon un même protocole, chacun de la pluralité de messages (22, 24, 26) étant destiné à une même destination (14) ;
la combinaison de la pluralité de messages (22, 24, 26) en un unique message enveloppe (35) par placement de la pluralité de messages (22, 24, 26) dans un corps (40) du message enveloppe unique (35) ;
**caractérisé en ce que**
le message enveloppe unique (35) est formaté suivant le même format que le même protocole tout en conservant le format de la pluralité de messages formatés selon le même protocole.

2. Le procédé de la revendication 1, dans lequel le message enveloppe unique (35) comprend un en-tête (38), et la transmission de la pluralité de messages (22, 24, 26) vers la même destination (14) est basée sur l'en-tête (38) du message enveloppe unique (35).

3. Le procédé de la revendication 1, dans lequel la combinaison de la pluralité de messages (22, 24, 26) comprend le maintien de la pluralité de messages (22, 24, 26) sous forme de messages distincts dans le corps (40) du message enveloppe unique (35).

4. Le procédé de la revendication 3, dans lequel la combinaison de la pluralité de messages (22, 24, 26) comprend la configuration de la pluralité de messages (22, 24, 26) dans une enveloppe interne (42) qui est disposée dans le corps (40) du message enveloppe unique (35).

5. Le procédé de la revendication 1, comprenant en outre la génération de la pluralité de messages (22, 24, 26) à partir de processus différents s'exécutant sur un premier noeud (10) d'un réseau (20).

6. Le procédé de la revendication 1, comprenant en outre l'envoi du message enveloppe unique (35) vers la même destination (14) à un instant prédéterminé.

7. Le procédé de la revendication 1, dans lequel la même destination (14) est un second noeud (14) du réseau (20), et comprenant en outre :
la réception du message enveloppe unique (35) par le second noeud (14) ;
l'identification du message enveloppe unique (35) comme contenant la pluralité de messages (22, 24, 26) ; et
la récupération de la pluralité de messages (22, 24, 26) à partir du message enveloppe unique (35).

8. Un procédé, comprenant :
la réception par un noeud (14) d'un message enveloppe unique (35) comprenant un en-tête (38) et un corps (40), le corps (40) comprenant une pluralité de messages distincts (22, 24, 26) formatés selon un même protocole ;
le décodage de l'en-tête (38) pour déterminer le nombre de messages (22, 24, 26) dans le corps (40) du message enveloppe unique (35) ;
**caractérisé en ce que**
le message enveloppe unique (35) est formaté selon le même format que le même protocole tout en conservant le format de la pluralité de messages distincts formatés selon le même protocole.

9. Le procédé de la revendication 8, comprenant en outre :
la corrélation des messages (22, 24, 26) inclus dans le message enveloppe unique reçu (35) sur la base des entêtes de message individuel (28a-c) et des enveloppes de protocole.

10. Un programme-produit informatique comprenant des instructions qui lorsqu'elles sont exécutées par une plateforme de calcul font en sorte que la plateforme de calcul mette en oeuvre le procédé de l'une des revendications 1 à 7 ou 8 à 9.
